# EUROPEAN PATENT SPECIFICATION

(11) **EP 3 167 985 B1**
(45) Date of publication and mention of the grant of the patent: **21.12.2022**
(21) Application number: 16198303.6
(22) Date of filing: 30.06.2015
(51) Int. Cl.: B23B 27/10, B23Q 11/10

(54) **A CUTTING TOOL**
SCHNEIDWERKZEUG
OUTIL DE COUPE

(43) Date of publication of application: 17.05.2017
(62) Divisional of application: 15174661.7
(73) Proprietor: Seco Tools AB, 737 82 Fagersta (SE)
(72) Inventor: FORSBERG, Svante, 737 31 Fagersta (SE); JONSSON, Mats, SE 776 92 Hedemora (SE); THELIN, Jimmy, 737 91 Fagersta (SE); LARSSON, Andreas J, 732 47 Arboga (SE); SUNDEN, Tony, 73732 Fagersta (SE); THURESSON, Jonas, 73733 Fagersta (SE)
(74) Representative: Sandvik

(56) References cited:
- EP-A1- 2 789 415
- US-A1- 2006 140 728
- US-A1- 2007 283 794
- US-A1- 2007 286 689
- US-A1- 2011 311 323
- US-A1- 2014 334 887

## Description

### FIELD OF THE INVENTION

The present invention relates to a cutting tool for metal chip removing machining and, more particularly, to such cutting tools having coolant flow channels.

### BACKGROUND AND SUMMARY

It is advantageous to deliver a coolant closely to a cutting area, using a cutting tool having a coolant supply, directing a coolant to a cutting edge of the cutting insert for minimizing the heat accumulated due to the interaction of a cutting insert with a machined workpiece. Conventional techniques for providing lubrication and/or coolant to cutting edges of cutting inserts typically involve introducing the coolant via openings in a toolholder for the cutting insert, or via spray nozzles directed at the cutting edges such as US 4,848,198. Some cutting inserts include channels formed in the cutting inserts that are in flow communication with and facilitate introduction of coolant from channels provided in the toolholder body. The provision of these coolant flow channels in the cutting inserts tends to substantially complicate manufacture of the cutting inserts, and the channels can weaken the cutting insert. EP2789415, on which the preamble of claim 1 is based, discloses cutting tools with an insert clamp having fluid flow passage.

It is desirable to provide a cutting tool that facilitate introduction of coolant to the cutting edges of the cutting insert that minimizes manufacturing complexity. It is also desirable to provide a cutting tool that facilitate introduction of coolant to the cutting edge without substantially interfering with the strength of the cutting insert.

### SUMMARY OF THE INVENTION

According to the present invention, a tool comprises a holder body having a pocket, a clamping means in the shape of a locking member, a cutting insert and a nozzle, said nozzle having a single through hole for a fastening member, said nozzle having a forward end, a rear end and a bottom face, said through hole extending between the bottom face and an opposite top face, at least one internal coolant channel being provided in the nozzle and extending from a first opening to a second opening, said first opening connecting to a coolant supply conduit in the holder body, said second opening serving as exit for the coolant at the forward end, wherein the at least one coolant channel and the first opening are spaced from the through hole to avoid interference therewith. The bottom face of the nozzle comprises a guide device such as a projection or recess adjacent to the forward end to set the direction of the nozzle by having the guide device cooperating with a recess or projection on the clamping means to secure that coolant direction for optimal performance always is the same when indexing or changing inserts.

Preferably, the nozzle has a longitudinal axis that intersects the through hole to be able to function as a lever, and the nozzle exhibits mirror symmetry about a plane containing a longitudinal axis of the nozzle to increase versatility.

Preferably, the first opening is located at a portion of the bottom face, said portion projecting such that a tangent to the bottom face perpendicular to a through hole axis intersects the first opening to thereby make sure the first opening is positioned close to the coolant supply conduit.

Preferably, the nozzle is a removable nozzle for turning applications where coolant cools the cutting insert and the tool comprises means to coolant-tightly seal the nozzle relative to the holder body to avoid leakage of coolant.

Preferably, there are two coolant channels extending at opposite sides of the through hole thereby facilitating increase in coolant flow while keeping the nozzle sturdy.

Preferably, the first opening is situated between the through hole and the rear end to make more space for fastening means.

Preferably, the coolant channel or the first opening is surrounded by a seal such as an O-ring.

Preferably, the nozzle is a one-piece unit preferably made through additive manufacturing, such that it has no plugged holes.

Preferably, the fastening member is a screw which extends along a hole in the holder body, said screw being intersected by upper and lower imaginary planes of the cutting insert.

Preferably, the nozzle acts as a clamp pressing against a part of the cutting insert.

Preferably, a single fastening member or screw secures both the cutting insert and the nozzle.

### BRIEF DESCRIPTION OF THE DRAWINGS

The features and advantages of the present invention are well understood by reading the following detailed description in conjunction with the drawings of
FIG. 1A-1K and FIG. 2A-2L, in which like numerals indicate similar elements and in which:
   FIG. 1A is a perspective view of a cutting tool not according to the claims;
   FIG. 1B is a side view of a nozzle of the cutting tool in Fig. 1A;
   FIG. 1C is a top view of the nozzle;
   FIG. 1D is a front view of the nozzle;
   FIG. 1E is a perspective front view of the nozzle, partially in section;
   FIG. 1F is an exploded side view of components including the nozzle of Figs. 1B-1E of the cutting tool according to an aspect of the present invention;
   FIG. 1G is a side view of the components;
   FIG. 1H is a bottom view of the components;
   FIG. 11 is a front view of the components;

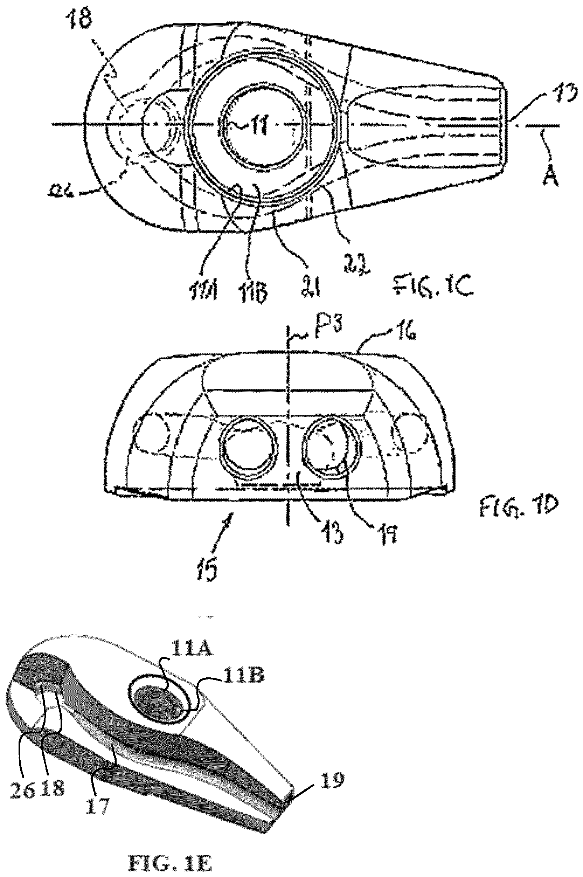

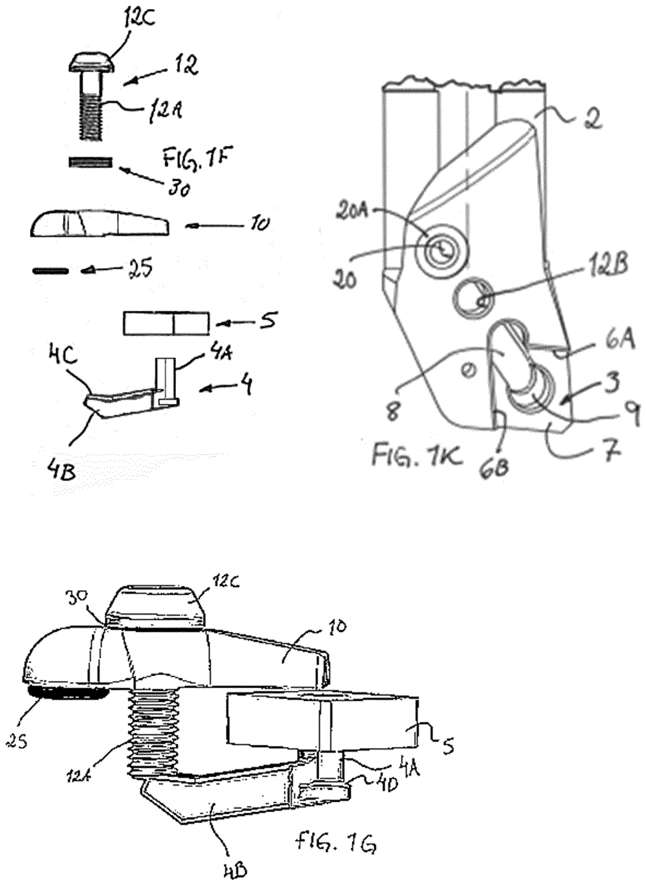

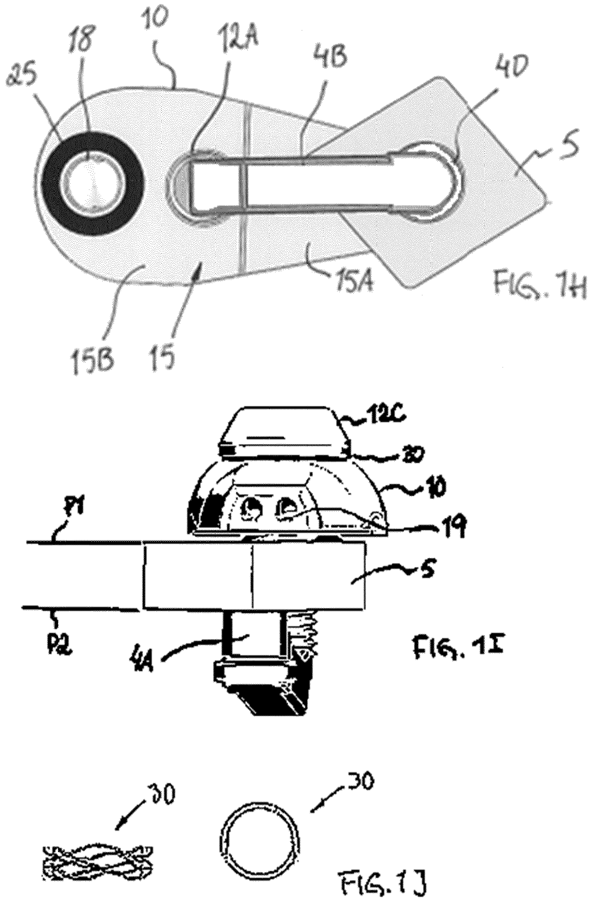

   FIG. 1J is a side view and top view of a spring included in the components;

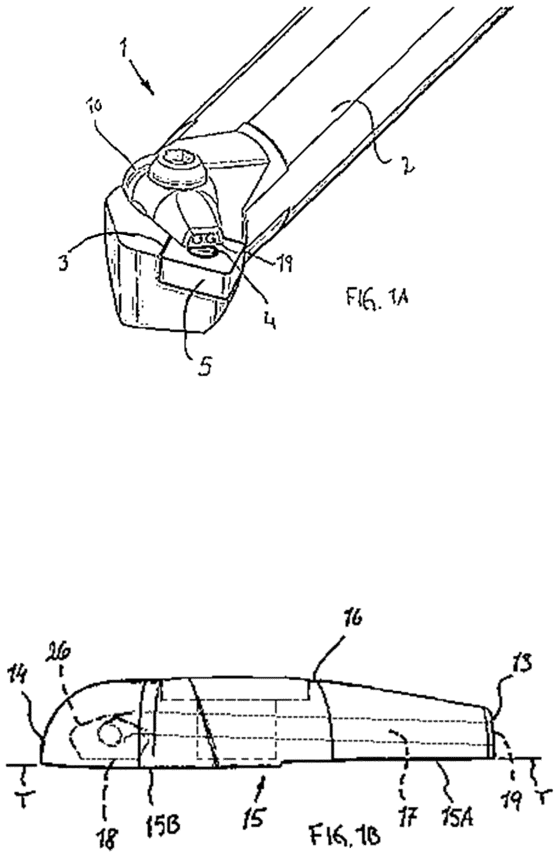

   FIG. 1K is a top view of a holder body of the cutting tool in Fig. 1A;

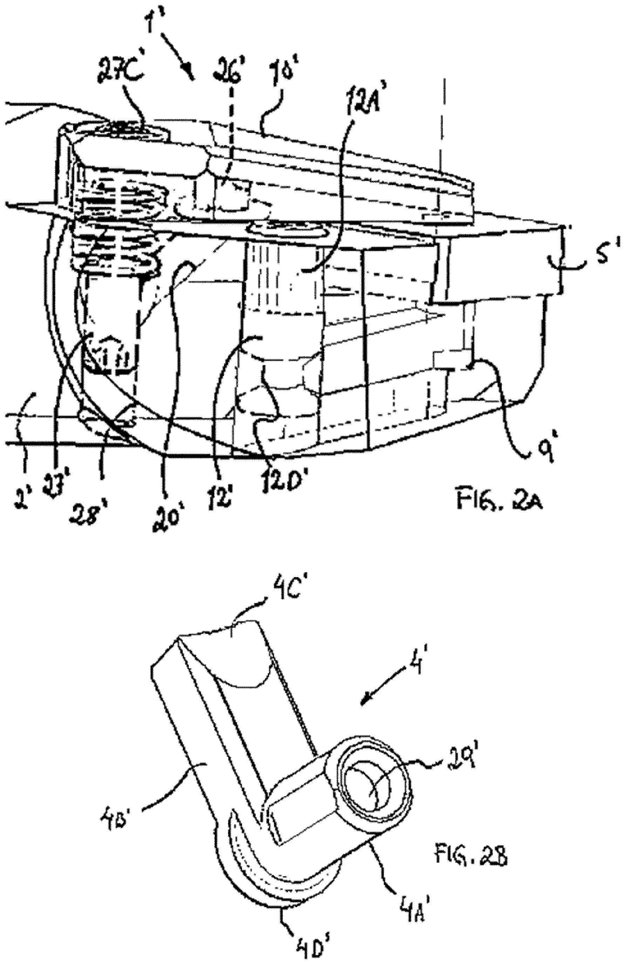

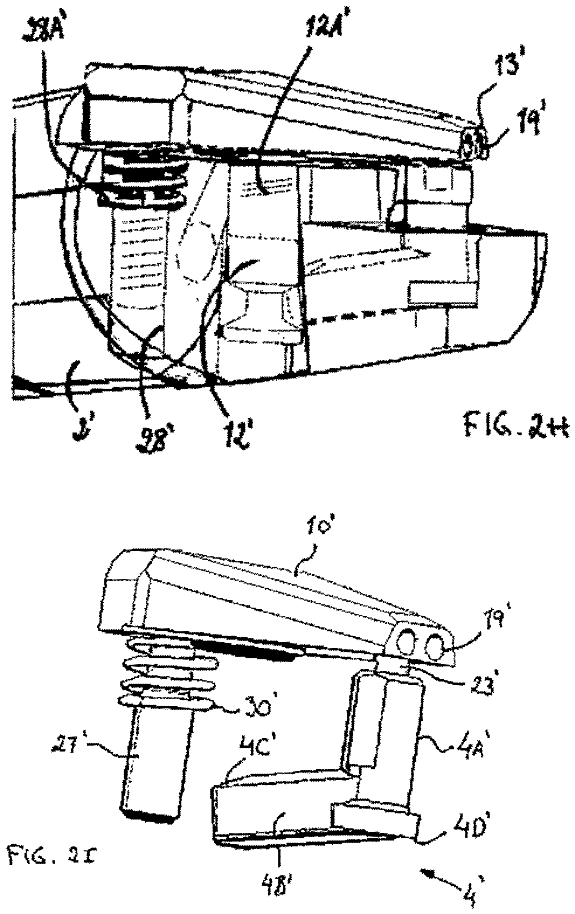

FIG. 2A is a perspective side view of a cutting tool according to the present invention;
FIG. 2B is a perspective view of a lever shown in FIG. 2A:

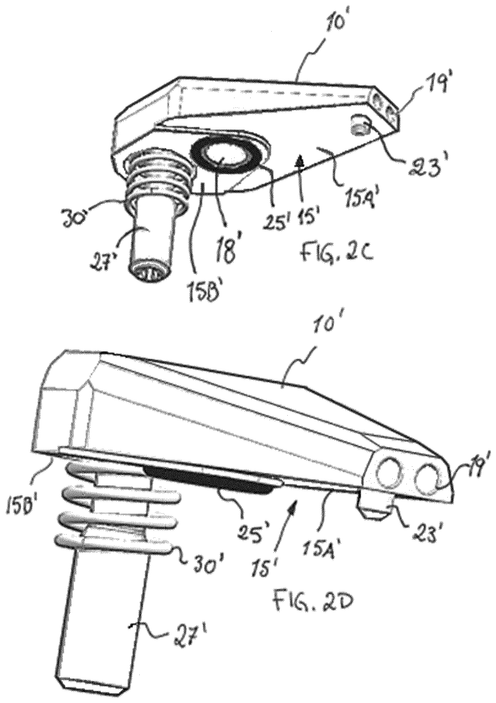

   FIG. 2C is a perspective view from below of a nozzle, a spring and fastening means shown in FIG. 2A:
   FIG. 2D is a perspective side view of the nozzle, the spring and the fastening means shown in FIG. 2A:

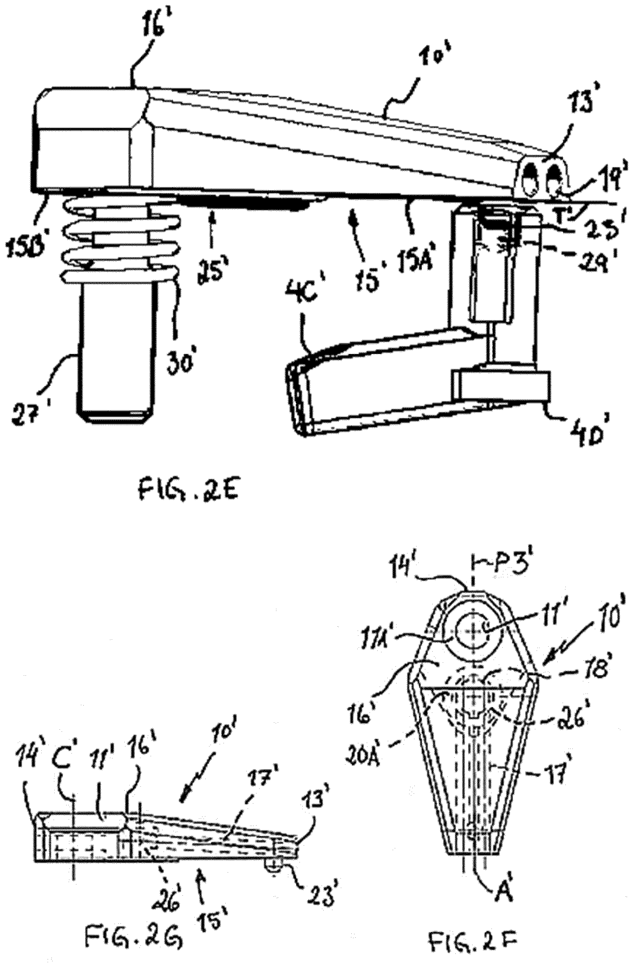

   FIG. 2E is a perspective side view of the nozzle, the spring, the fastening means and the lever shown in FIG. 2A;
   FIG. 2F is a top view of the nozzle;
   FIG. 2G is a side view of the nozzle,
   FIG. 2H is a perspective side view of the cutting tool in FIG. 2A without a cutting insert;
   FIG. 21 is a perspective front view of the nozzle and the lever;

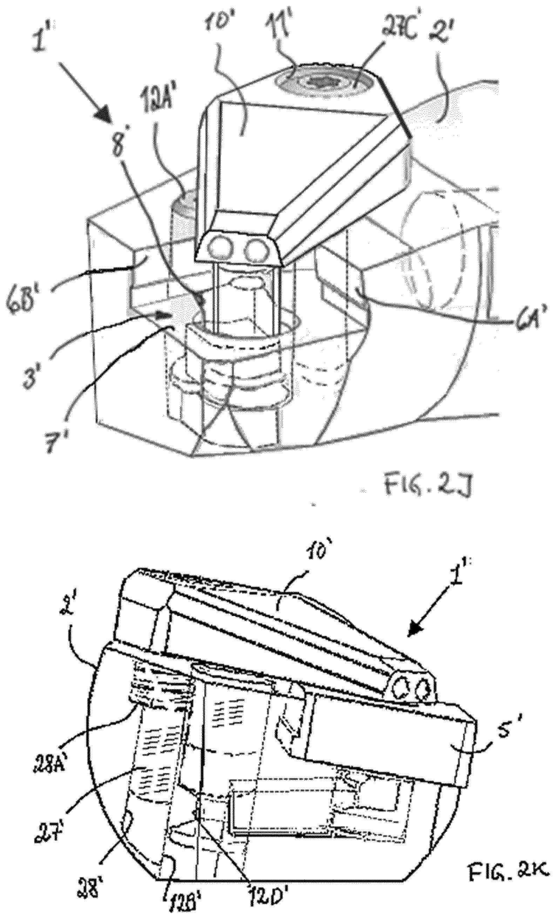

   FIG. 2J is a perspective front view of the cutting tool in FIG. 2A without a cutting insert;
   FIG. 2K is a perspective front view of the cutting tool in FIG. 2A;

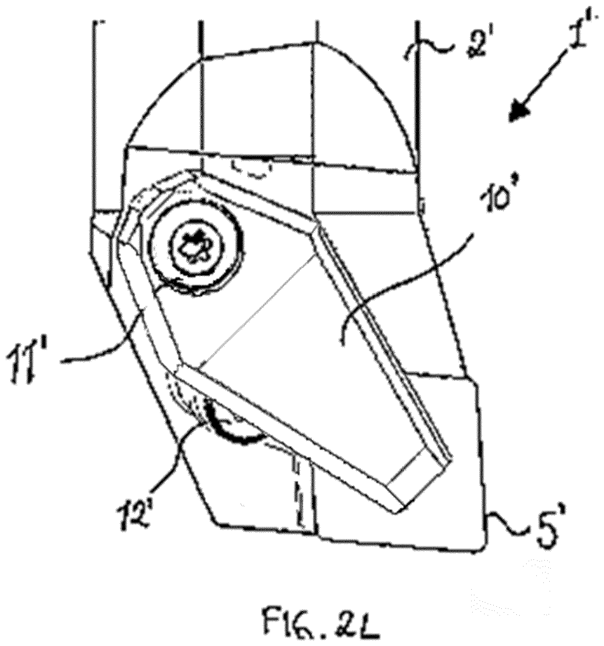

   FIG. 2L is a top view of the cutting tool in FIG. 2A.

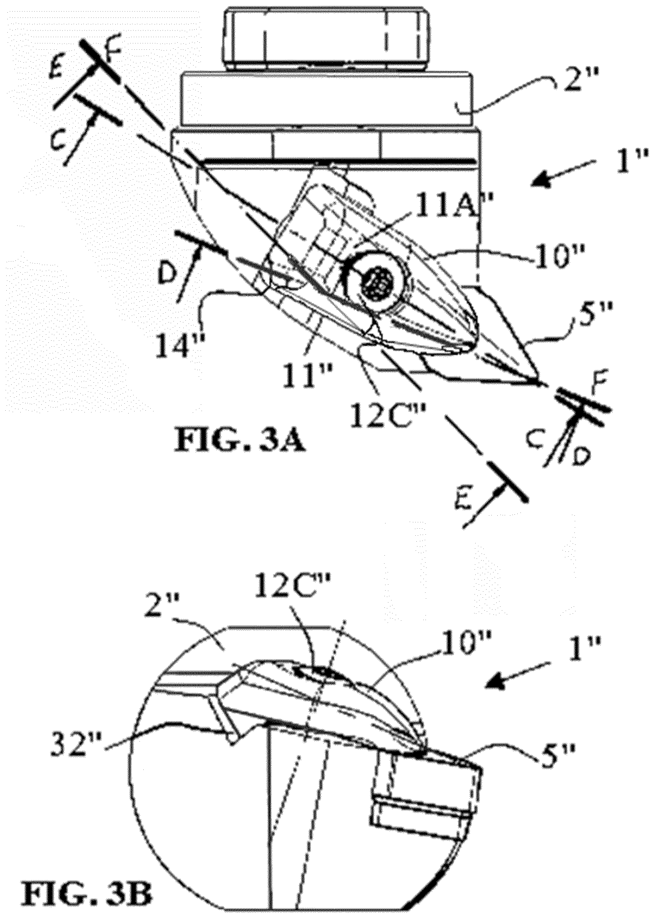

FIG. 3A is a top view of a cutting tool not according to the claims;
FIG. 3B is a front view of the cutting tool in FIG. 3A;

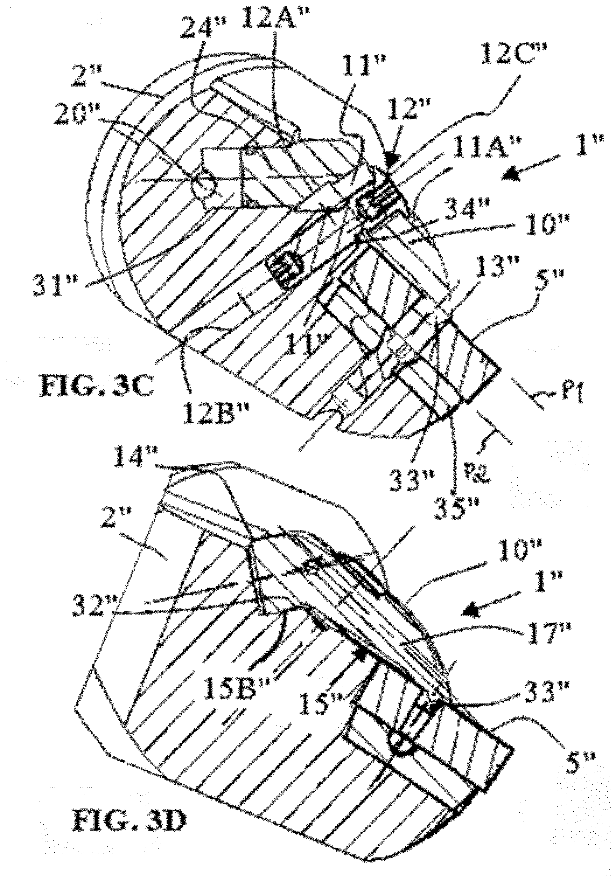

FIG. 3C is a cross-sectional view along line C-C in FIG. 3A;
FIG. 3D is a cross-sectional view along line D-D in FIG. 3A;

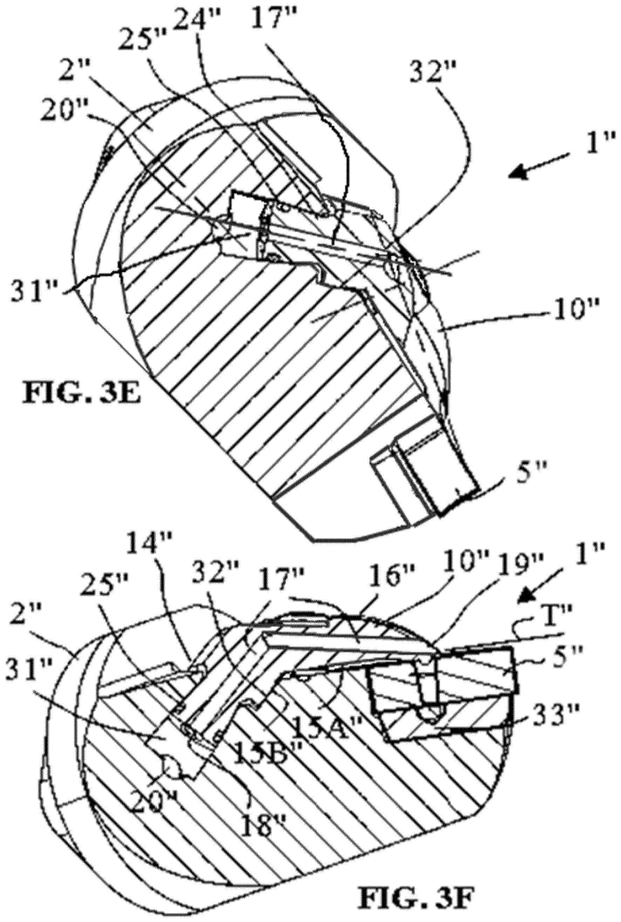

FIG. 3E is a cross-sectional view along line E-E in FIG. 3A; and
FIG. 3F is a cross-sectional view along line F-F in FIG. 3A.
The figures 1B, 1C, 1D and the figures 2A, 2E, 2H, 2J, 2K and 2L have been depicted by at least partly transparent illustrations for ease of understanding. It is however understood that the tools themselves are not transparent.

### DETAILED DESCRIPTION

Reference is made to FIGS. 1A-1K showing a cutting tool 1 not according to the claims. The shown cutting tool 1 may be a turning tool for internal metal machining and comprises a holder body 2 having a pocket 3, a clamping means in the shape of a locking member 4 and an inducer or nozzle 10. The pocket 3 is conventional and may have a bottom surface 7 and two upstanding walls 6A and 6B. The bottom surface 7 may have a recess 8 to accommodate the locking member 4. The bottom surface may be provided with a removable shim, not shown. The recess 8 is key lock shaped in top view, e.g. a combination of a circle and a rectangle, and may have a ledge 9 below about a center of the bottom surface 7. The indexable cutting insert 5 is clamped in the pocket by means of an L-shaped locking member 4 projecting into a hole of the cutting insert. In the illustrated embodiment, the cutting insert and pocket are generally diamond in shape but may have other shapes. The L-shaped locking member urges the converging sides of the cutting insert 5 against upstanding walls 6A and 6B, which are of substantially complementary shape to the sides of the cutting insert. The locking member forms one leg 4B of an L-shape pivotally arranged in the recess 8 in the holder 2, the other leg 4A of which member extends through a hole of the cutting insert 5. The locking member may have a rim 4D which rests upon the ledge 9 in the recess 8. Actuating means or fastening means 12 is provided to move the leg 4B downwardly and by this cause a pivoting action of the locking member around an axis and about a fulcrum point of the rim 4D and the ledge 9. The said axis forms substantially a right angle with the direction in which the leg 4B extends. In the illustrated embodiment, the means 12 is in the form of a screw 12A threadably engaged in a hole 12B in the holder 2. The screw 12A may have a single threaded end portion and may have an end portion arranged to engage the free end 4C of the leg 4B of the L-shaped locking member 4, when the screw 12A is turned, to cause said pivoting action of the locking member around the fulcrum point formed in the holder 2. The leg 4A passes through the recess 8 in the holder, the opening being shaped and dimensioned so as not to impede desired pivotal movement of the legs. The locking member leg 4A extends into a central hole in the cutting insert and serves to detachably secure the cutting insert in the pocket 3. The pivotal movement of the leg 4A causes the cutting insert 5 to move towards the walls 6A and 6B and be clamped thereto.

The screw 12A may extend along a hole 12B in the holder body 2. The screw is intersected by upper (P1) and lower (P2) imaginary planes of the cutting insert. The planes P1 and P2 may be parallel and each plane may touch at least two, preferably three or four, corner portions of the upper and lower surface of the cutting insert, respectively. The nozzle 10 exhibits mirror symmetry about a first plane P3 containing a longitudinal axis A of the nozzle as can be seen, for example, in FIG. 1D. The nozzle may be a one-piece unit. The nozzle includes a forward end 13, a rear end 14 and a bottom face 15. The bottom face 15 comprises a first surface 15A and a second surface 15B, the first surface being generally recessed relative to the second surface. A single through hole 11 extends between the bottom face 15 or the second surface 15B and an opposite top face 16. The single through hole 11 may be surrounded by an enlarged cavity 11A at the top face 16. At least one internal coolant channel 17 is provided in the nozzle that extends from a first opening 18 to a second opening 19, and is preferably not having any strength reducing or plugged holes such as stop screws in holes. By the expression "internal coolant channel" is here primarily meant self-contained channels where the walls of the channel are within the nozzle. The first opening 18 is connectable to the coolant supply conduit 20 in the holder body. The first opening 18 is located at the second surface 15B of the bottom face 15. The second surface 15B projects such that a tangent T to the first surface 15A facing the cutting insert 5, and perpendicular to a through hole axis intersects the first opening or the channel 17. The first opening 18 is positioned between the through hole 11 and the rear end 13 and may comprise a chamber 26 in flow communication with the second opening 19. The second opening 19 serves as exit for the coolant at the forward end 13. The at least one coolant channel 17 and the first opening 18 are spaced from, i.e. not in contact with the through hole 11. The at least one coolant channel 17 may follow a smooth path without sudden directional changes such that coolant flow is not obstructed. At least a first portion 21 of the coolant channel 17 transits mathematically smooth or continuous into a second portion 22 of the coolant channel. The first and second portions of the coolant channel are designed such that first derivatives thereof are continuous if their lower peripheries are seen as mathematical curves for example as in the top view of Fig. 1C. Thereby, there will be reduced risk for oil traps when using oil mist as coolant.

Suitably, the nozzle 10 is made through precision casting or additive manufacturing such as metal 3D printing processes which use binders, or fully dense metal processes like selective laser sintering (SLS) or direct metal laser sintering (DMLS). The latter technology uses a high power laser to fuse small particles of metal powders into a nozzle that has the described three dimensional shape. The laser selectively fuses the powdered metal by scanning the crosssections (or layers) generated by a three dimensional modeling program on the surface of a powder bed. After each cross-section is scanned, the powder bed is lowered by one layer thickness. Then a new layer of material is applied on top and the process is repeated until the nozzle is completed.

The nozzle 10 can be held to the holder body by the fastening member 12, preferably by the screw 12A. The single through hole 11 receives the fastening member 12 carrying a spring 30 and that is threadedly secured to a hole 12B in the holder body. The cavity 11A bottom 11B is intended to serve as a seat for the spring 30, such as a multiwave compression spring of for example stainless steel. Multiwave compression springs may be used in applications where space problems in length preclude the option of using a normal compression spring. The spring 30 is more closely shown in FIG. 1J. Other spring means can be used such as rubber washers. The nozzle does not have a front projection to engage a wall of the through hole of the cutting insert. The coolant is led through conduits passing through the holder body and requires connecting passageways and a deformable seal to lead the coolant to a discharge exit 19.

The fastening member 12 may have a head 12C which has an underside that can act on the spring 30 and urge the nozzle towards the holder. A seal element 25, such as an O-ring may be secured to or be loosely held by the nozzle or be secured to or be loosely held by a concave cavity 20A surrounding the conduit 20 opening in the holder body 2. The seal element 25 may be compressed between the nozzle and the holder body during the tightening of the fastening member to coolant-tightly seal the conduit 20 opening.

At mounting of the cutting insert 5 to the holder body 2 the locking member 4 sits in the recess 8 by interaction of the rim 4D and the ledge 9 in a conventional manner. The screw 12A is passed through the spring means 30 and the nozzle hole 11 and threaded through the hole 12B in the holder body 2. Suitably, the nozzle is rotated about the screw 12 to a position where it does not interfere with the space needed to mount the cutting insert. The end of the screw 12A will abut against the leg 4B and thereby cause pivotal movement of the leg 4A. If a cutting insert 5 is mounted in the pocket 3 the leg 4A will urge the cutting insert in direction towards the upstanding walls 6A and 6B. The nozzle is rotated about the screw into desired position when the cutting insert has been mounted. The screw head 12C will act on the spring means 30 and force the nozzle in direction towards the holder body. By choosing the correct elasticity property for the spring means 30 and the correct direction of the nozzle, the nozzle will become clamped against the holder body via the interaction of the seal 25 and the concave cavity 20A. The nozzle first surface 15A is spaced from, i.e. not in contact with the cutting insert 5 in assembled state. The holder body and/or the nozzle may be provided with means to guide the nozzle to a desired direction, such as protrusions acting peripherally on the nozzle or at least one protrusion acting in the forward end of the nozzle acting centrally on the cutting insert. The nozzle in this embodiment is not meant to clamp on the cutting insert but can do so if for example a thicker O-ring is used instead of the O-ring 25 shown. In the latter case the nozzle will tilt about an axis perpendicular to the length axis A and the forward end thereof will contact the cutting insert.

In use the shown tool will be turning metal workpieces while coolant may flow in order through the holder body 2, the coolant supply conduit 20, the seal 30, the fluid channel 17 and from the exit 19 to at least one active cutting edge.

Stated another way, a single fastening member 12 or screw 12A secures both the cutting insert 5 and the nozzle 10.

FIGS. 2A to 2L show a cutting tool 1' according to the present invention. The shown cutting tool may be a turning tool for internal metal machining and comprises a holder body 2' having a pocket 3', a clamping means in the shape of a locking member 4' and an inducer or nozzle 10'. The pocket 3' is conventional and may have a bottom surface 7' and two upstanding walls 6A' and 6B'. The bottom surface 7' may have a recess 8' to accommodate the locking member 4'. The bottom surface may be provided with a removable shim, not shown. The recess 8' is key lock shaped in top view, e.g. a combination of a circle and a rectangle, and may have a ledge 9' below about a center of the bottom surface 7'. The recess 8' may extend only below the upstanding wall 6B' to avoid interfering with any desired space for a coolant supply conduit 20'. The indexable cutting insert 5' is clamped in the pocket by means of an L-shaped locking member 4' projecting into a hole of the cutting insert. In the illustrated embodiment, the cutting insert is generally of rhombic shape. The L-shaped locking member urges a side of the cutting insert 5' initially against the upstanding wall 6B', and then against the upstanding wall 6A', both of which are of substantially complementary shape to the sides of the cutting insert. The locking member has one leg 4B' of the L-shape pivotally arranged in the recess 8' in the holder 2', the other leg 4A' of which member extends through the hole of the cutting insert 5'. A free end of the leg 4A' has a recess 29', such as a blind hole. The locking member may have a rim 4D' which rests upon the ledge 9' in the recess 8. Actuating means or fastening means 12' is provided to move the leg 4B' downwardly and by this cause a pivoting action of the locking member around an axis and about a fulcrum point of the rim 4D' and the ledge 9'. The said axis forms substantially a right angle with the direction in which the leg 4B' extends. In the illustrated embodiment, the means 12' is in the form of a screw 12A' threadably engaged in a hole 12B' in the holder 2'. The screw 12A' may have a single threaded end portion and may have a waist portion 12D' arranged to receive the free end 4C' of the leg of the L-shaped locking member 4', when the screw 12A' is turned, to cause said pivoting action of the locking member around the fulcrum point formed in the holder 2'. The leg 4B' passes through the recess 8' in the holder, the opening being shaped and dimensioned so as not to impede desired pivotal movement of the legs. The locking member leg 4A' extends into the central hole of the cutting insert and serves to detachably secure the cutting insert in the pocket 3'. The pivotal movement of the leg 4A' causes the cutting insert 5' to move towards the walls 6A' and 6B' and be clamped thereto. The screw 12A' may extend along an at least partly threaded hole 12B' in the holder body 2'. The screw may be intersected by upper and lower imaginary planes of the cutting insert. The planes may be parallel and each plane may touch at least two, preferably three or four, corner portions of the upper and lower surface of the cutting insert, respectively.

The nozzle 10' may exhibit mirror symmetry about a first plane P3' containing a longitudinal axis A' of the nozzle as can be seen, for example, in FIG. 2F. The nozzle may be a one-piece unit. The nozzle includes a forward end 13', a rear end 14' and a bottom face 15'. The bottom face 15' comprises a first surface 15A' and a second surface 15B', the first surface being generally recessed relative to the second surface. A single through hole 11' extends between the bottom face 15' and an opposite top face 16'. At least one internal coolant channel 17' is provided in the nozzle that extends from a first opening 18' to a second opening 19', and preferably has no strength reducing or plugged holes such as stop screws in holes. The first opening 18' is connectable to the coolant supply conduit 20' in the holder body. The first opening 18' is located at the second surface 15B' of the bottom face 15'. The second surface 15B' projects such that a tangent T' to the first surface 15A' facing the cutting insert 5', and perpendicular to a through hole axis intersects the first opening or the channel 17. The first opening 18' is positioned between the through hole 11' and the forward end 13' and may comprise a chamber 26' in flow communication with the second opening 19'. The second opening 19' serves as exit for the coolant at the forward end 13'. The at least one coolant channel 17' and the first opening 18' are spaced from, i.e. not in contact with the through hole 11. The at least one coolant channel 17' may follow a smooth path without sudden directional changes such that coolant flow is not obstructed. The channel may be straight or have a path that resembles the one of above-captioned channel 17. The single through hole 11' may be surrounded by an enlarged cavity 11A' at the top face 16.

The nozzle 10' may be made through conventional machining, precision casting or additive manufacturing such as selective laser sintering (SLS).

The nozzle 10' can be held to the holder body 2' by a screw member 27'. The single through hole 11' is countersunk and receives the screw member 27' which is threadedly secured to a hole 28' in the holder body. The screw member 27' may have a head 27C' which has an underside that can act on a cavity bottom 11B' in the through hole 11'. The hole 28' has an enlarged portion 28A' to accommodate a spring 30', such as a helical compression spring.

The bottom face 15' of the nozzle comprises a guide device 23', such as a projection or recess, close to or at the forward end 13' to direct the nozzle and thereby direct a coolant jet by having the guide device releasably cooperating with a recess or projection on a clamping means such as the locking member 4'. The nozzle has a guide device such as a projection 23' adjacent the forward end 13' to preferably loosely engage the recess 29' of the locking member 4'. The projection 23' may be part of the forward end 13' or spaced from it by a distance that is less than a half length of the nozzle. Preferably the projection is formed close to the forward end like in for example FIG. 2G for best guidance of the coolant.

The coolant is led through conduits passing through the holder body 2' and requires connecting passageways and a deformable seal element 25' to lead the coolant to the discharge exit 19'. The seal element 25', such as an O-ring may be secured to or be loosely held by the nozzle or be secured to or be loosely held by the holder body.

At mounting of the cutting insert 5' to the holder body 2' the locking member 4' sits in the recess 8' by interaction of the rim 4D' and the ledge 9' in a conventional manner. The screw 12A' is passed through the nozzle hole 11' and threaded through the hole 12B' in the holder body 2'. In a similar way as described in connection with the previous embodiment of the invention (i.e. the free end of the screw 12A) the waist portion 12D' of the screw 12A' will bring the leg 4B' and thereby cause pivotal movement of the leg 4A'. If a cutting insert 5' is mounted in the pocket 3' the leg 4A' will urge the cutting insert in direction towards the upstanding walls 6A' and 6B'. Also, the screw head 27C' will act on the cavity 11' bottom and force the nozzle against the spring means 30 in direction towards the holder body. By choosing the correct direction of the nozzle, i.e. such that the projection 23' is aligned with the hole 29' usually such that the axis A' maybe coincides with a cutting insert corner bisector, the nozzle will become clamped against the holder body via the interaction of the seal 25' and the concave cavity 20A' and guided by the projection 23'/recess 29' interface. The nozzle is thereby provided with means to guide it into a desired direction. Of course the projection 23' is shorter than the depth of the hole 29' for the coolant sealing to be effective. The nozzle bottom face 15A' is spaced from, i.e. not in contact with the cutting insert 5' in assembled state. The nozzle in this embodiment is not meant to clamp on the cutting insert since there is a gap between the cutting insert and the bottom face 15', but can do so. In the latter case the projection can be elastic or resilient to allow sealing although the projection is in contact with a locking member or cutting insert.

In use the shown tool will be turning metal workpieces while coolant may flow in order through the holder body 2', the coolant supply conduit 20', the seal 25', the fluid channel 17' and from the exit 19' towards at least one active cutting edge.

Reference is now made to FIGS. 3A-3F showing a cutting tool 1" not being a part of the present invention. The shown cutting tool 1" may be a turning tool for internal metal machining and comprises a holder body 2" having a pocket 3", a clamping means in the shape of a locking member 4" and an inducer or nozzle 10. The pocket 3" is conventional and may have a bottom surface and two upstanding walls as discussed previously. The bottom surface is provided with a removable shim. The indexable cutting insert 5" is clamped in the pocket by means of nozzle 10" gripping into a hole of the cutting insert. In the illustrated embodiment, the cutting insert is generally diamond in shape. The nozzle 10" is intended to urge the converging sides of the cutting insert 5" against the upstanding walls, which are of substantially complementary shape to the sides of the cutting insert. Actuating means or fastening means 12" is provided to move the nozzle 10" along a path depicted by line C-C in FIG. 3A. In the illustrated embodiment, the means 12" is in the form of a screw 12A" threadably engaged in a hole 12B" in the holder 2".

The holder body 2" is provided with a concave or V-shaped cavity 32" whose bottom may be perpendicular to the axis or line C-C in FIG. 3A which line may coincide with a bisector of an active cutting corner of the cutting insert. The cavity 32" is provided at a distance from the pocket 3". A guide hole 31" intersects the cavity 32". The guide hole 31" may be cylindrical and is in flow communication with a coolant supply conduit 20" extending in the holder body. The threaded hole 12B" is provided between the cavity and the pocket. The guide hole 31" has a central axis that forms an acute angle with a central axis of the cutting insert hole. Said angle is between 35 and 50 degrees. The guide hole central axis forms an even acuter angle with a central axis of the threaded hole 12B". Said angles are measured in the plane corresponding to FIG. 3C.

The nozzle 10" exhibits mirror symmetry about a first plane containing a longitudinal axis C-C of the nozzle. The nozzle may be a one-piece unit. The nozzle includes a forward end 13", a rear end 14" and a bottom face 15". The bottom face 15" comprises a first surface 15A" and a second surface 15B, the first surface being generally recessed relative to the second surface. As best seen in FIG. 3C, the bottom face 15" of the forward end 13" of the nozzle 10" includes a lip portion 33" to be held in engagement with the hole of the cutting insert 5" in a conventional manner.

A single through hole 11" extends between the bottom face 15" or partly from both the first and second surfaces 15A" and 15B" and an opposite top face 16". The second surface 15B" may have a shape that is complementary to a leg of the V-shaped cavity closest to the cutting insert. The single through hole 11" is noncylindrical by having an elongated or oval cross-section to allow perpendicular movement of the through hole 11" relative to the screw 12". The single through hole 11" may be surrounded by an enlarged cavity 11A" at the top face 16". At least one internal coolant channel 17" is provided in the nozzle that extends from a first opening 18" to a second opening 19", and is preferably not having any strength reducing or plugged holes such as stop screws in holes. The first opening 18" is connectable to the coolant supply conduit 20" in the holder body. The rear end 14" of the nozzle connects to a heel protrusion 24" carrying the first opening 18" at a free end thereof. The first opening 18" is located at a portion or second surface 15B" of the bottom face 15". In the shown embodiment there are two openings 18" at the free end. The heel protrusion 24" is preferably cylindrical and has a circumferential groove to receive a seal element 25" such as an O-ring. The diameter of the heel protrusion 24" is slightly less than the diameter of the guide hole 31" to allow entry therein while the seal element becomes compressed. The heel protrusion 24" has an axis that forms an acute angle with a central axis of the cutting insert hole. Said angle is between 35 and 50 degrees. The heel protrusion axis forms an even acuter angle with a central axis of the though hole 11". Said angles are measured in the plane corresponding to FIG. 3C.

The second surface 15B" projects such that a tangent T" (FIG. 3F) to the first surface 15A" facing the cutting insert 5", and perpendicular to a cutting insert through hole axis intersects the channel 17" and usually also the heel projection 24". The first opening 18" may comprise a chamber (not shown) in flow communication with the second opening 19" similar to the one discussed above. The second opening 19" serves as exit for the coolant at the forward end 13". The at least one coolant channel 17" and the first opening 18" are spaced from, i.e. not in contact with the through hole 11". The at least one coolant channel 17" is shown as comprising two straight portions in for example FIG. 3F but may follow a smooth path without sudden directional changes such that coolant flow is not obstructed as discussed before to reduce the risk for oil traps. The nozzle 10" may be made through conventional machining, precision casting or additive manufacturing or any combination thereof.

The screw 12A" may have a single threaded end portion and may have a key grip at each end or only one end. The lip portion 33" extends into the central hole in the cutting insert and serves to detachably secure the cutting insert in the pocket 3. The movement of the nozzle causes the cutting insert 5" to move towards the upstanding pocket walls and a shim 35" or the pocket bottom surface and be clamped thereto. The screw 12A" may extend along a hole 12B" in the holder body 2". The screw is intersected by upper (P1) and lower (P2) imaginary planes of the cutting insert. The planes P1 and P2 may be parallel and each plane may touch at least two, preferably three or four, corner portions of the upper and lower surface of the cutting insert, respectively.

The nozzle 10" can be held to the holder body by the fastening member 12", preferably by the single screw 12A". The single through hole 11" receives the fastening member 12" which may have a cross-sectional restriction below the tangent T" to form a seat for a clip 34", the latter functioning to lift the nozzle during unscrewing of the screw 12A".

At initial assembly of the tool 1" the cutting insert 5" is positioned in the pocket of the holder body 2" in a conventional manner. The screw 12A" is passed through the nozzle hole 11" and the clip 34" is secured to the restriction below the nozzle. The screw 12A" is pushed backward along the elongated through hole 11" such that the screw 12A" and the heel projection may enter the guide hole 31" and the hole 12B", respectively, and the lip portion 33" is aligned in the cutting insert hole. The screw 12A" is then tightened in the hole 12B" of the holder body 2. The screw head 12C" will act on the cavity 11A" bottom and force the nozzle in two directions towards the holder body defined by the guide hole 31" axis and the hole 12B" axis, respectively. The screw head 12C" will slide on the cavity 11A" bottom towards the forward end of the elongated hole 11" while the cutting insert is being clamped. The second surface 15B" and the heel projection may cooperate with the V-shaped cavity 32" and the guide hole 31" to create the pull of the nozzle. The cutting insert will thus become clamped in the pocket. When indexing a new cutting edge or new cutting insert the screw 12A" need not be fully unscrewed just enough to give space to manipulate the cutting insert. The coolant is led through conduits passing through the holder body and requires connecting passageways to lead the coolant to the discharge exit 19". The array of conduits is not interrupted at indexing of the cutting insert.

In use the shown tool will be turning metal workpieces while coolant may flow in order through the holder body 2", the coolant supply conduit 20", the fluid channel 17" and from the exit 19" to at least one active cutting edge.

Stated another way, a single fastening member 12" or screw 12A" secures both the cutting insert 5" and the nozzle 10".

Tool life generally increases with increase in coolant supply pressure. This can be attributed to the ability of the high-pressure coolant to lift the chip and gain access closer to the cutting interface. This action leads to a reduction of the seizure region, thus lowering the friction coefficient, which in turn results in reduction in cutting temperature and cutting forces. Preferably the pressure used in the discussed embodiments is above 30 bar, preferably above 100 bar coolant pressure.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "upper", "lower", "top", "bottom", "forward" and "rear" refer to features as shown in the current drawings and as perceived by the skilled person.

While this invention has been illustrated and described in accordance with a preferred embodiment, it is recognized that variations and changes may be made therein without departing from the invention as set forth in the claims.

## Claims

1. A tool comprising a holder body (2;2') having a pocket (3;3'), a cutting insert (5;5') and a nozzle (10;10'), said nozzle (10;10') having a single through hole (11;11') for a fastening member (12;12'), said nozzle having a forward end (13;13'), a rear end (14;14') and a bottom face (15;15'), said through hole extending between the bottom face and an opposite top face (16;16'), at least one internal coolant channel (17;17') being provided in the nozzle and extending from a first opening (18;18') to a second opening (19;19'), said first opening connecting to a coolant supply conduit in the holder body, said second opening serving as exit for the coolant at the forward end, wherein the at least one coolant channel (17;17') and the first opening (18;18') are spaced from the through hole (11;11'), wherein the bottom face (15;15') of the nozzle (10') comprises a guide device (23') such as a projection or recess adjacent to the forward end (13;13') to set the direction of the nozzle (10'), **characterized in that** it further comprises a clamping means in the shape of a locking member (4;4'), and **in that** the direction of the nozzle (10') is set by having the guide device cooperating with a recess or projection on the clamping means.

2. The tool according to claim 1, wherein the nozzle (10;10') has a longitudinal axis (A;A') that intersects the through hole (11;11') and wherein the nozzle exhibits mirror symmetry about a plane containing a longitudinal axis (A;A') of the nozzle.

3. The tool according to claim 1 or 2, wherein the first opening (18;18') is located at a portion or second surface (15B;15B') of the bottom face (15;15'), said portion projecting such that a tangent (T) to the bottom face facing the cutting insert (5;5'), and perpendicular to a through hole axis (C) intersects the first opening or the channel (17;17').

4. The tool according to claim 1, 2 or 3, wherein the nozzle (10;10') is a removable nozzle for turning applications and wherein the tool comprises means (25;25') to coolant-tightly seal the nozzle relative to the holder body (2;2').

5. The tool according to anyone of claims 1 - 4, wherein there are two coolant channels (17;17') extending at opposite sides of the through hole (11;11').

6. The tool according to anyone of claims 1 - 5, wherein the first opening is situated between the through hole (11;11') and the rear end (14;14').

7. The tool according to anyone of claims 1 - 6, wherein the coolant channel (17;17') or the first opening (18;18') is surrounded by a seal such as an O-ring (25;25').

8. The tool according to anyone of claims 1 - 7, wherein the nozzle is a onepiece unit.

9. The tool according to anyone of claims 1 - 8, wherein the fastening member (12;12') is a screw (12A;12A') which extends along a hole (12B) in the holder body (2;2'), said screw being intersected by upper (P1) and lower (P2) imaginary planes of the cutting insert.

10. The tool according to anyone of claims 1 - 9, wherein the nozzle (10;10';10") acts as a clamp pressing against a part of the cutting insert.

11. The tool according to anyone of claims 1 - 9, wherein a single fastening member (12) or screw (12A) secures both the cutting insert (5) and the nozzle (10).

## Patentansprüche

1. Werkzeug mit einem Halterkörper (2; 2'), der eine Tasche (3; 3') aufweist, einem Schneideinsatz (5; 5') und einer Düse (10; 10'), wobei die Düse (10; 10') ein einzelnes Durchgangsloch (11; 11') für ein Befestigungselement (12; 12') aufweist, wobei die Düse ein vorderes Ende (13; 13'), ein hinteres Ende (14; 14') und eine Unterseite (15; 15') aufweist, wobei sich das Durchgangsloch zwischen der Unterseite und einer gegenüberliegenden Oberseite (16; 16') erstreckt, wobei mindestens ein innerer Kühlmittelkanal (17; 17') in der Düse vorgesehen ist und sich von einer ersten Öffnung (18; 18') zu einer zweiten Öffnung (19; 19') erstreckt, wobei die erste Öffnung mit einer Kühlmittelzufuhrleitung in dem Halterkörper verbunden ist, wobei die zweite Öffnung als Ausgang für das Kühlmittel an dem vorderen Ende dient, wobei der mindestens eine Kühlmittelkanal (17; 17') und die erste Öffnung (18; 18') von dem Durchgangsloch (11; 11') beabstandet sind, wobei die Unterseite (15; 15') der Düse (10') eine Führungseinrichtung (23') wie beispielsweise einen Vorsprung oder eine Aussparung aufweist, die sich in der Nähe des vorderen Endes befindet, um die Richtung der Düse (10') festzulegen, **dadurch gekennzeichnet, dass** es ferner eine Einspanneinrichtung in Form eines Feststellelements (4; 4') aufweist, und dass die Richtung der Düse (10') dadurch festgelegt wird, dass die Führungseinrichtung mit einer Aussparung oder einem Vorsprung an der Einspanneinrichtung zusammenwirkt.

2. Werkzeug nach Anspruch 1, wobei die Düse (10; 10') eine Längsachse (A; A') aufweist, die das Durchgangsloch (11; 11') schneidet, und wobei die Düse Spiegelsymmetrie um eine Ebene aufweist, die eine Längsachse (A; A') der Düse enthält.

3. Werkzeug nach Anspruch 1 oder 2, wobei die erste Öffnung (18; 18') an einem Abschnitt oder einer zweiten Oberfläche (15B; 15B') der Unterseite (15; 15') angeordnet ist, wobei der Abschnitt so vorsteht, dass eine Tangente (T) der Unterseite, welche dem Schneideinsatz (5; 5') zugewandt und senkrecht zu einer Durchgangslochachse (C) ist, die erste Öffnung oder den Kanal (17; 17') schneidet.

4. Werkzeug nach Anspruch 1, 2 oder 3, wobei die Düse (10; 10') eine abnehmbare Düse für Drehanwendungen ist und wobei das Werkzeug Mittel (25, 25') zum kühlmitteldichten Abdichten der Düse gegenüber dem Halterkörper (2; 2') umfasst.

5. Werkzeug nach einem der Ansprüche 1-4, wobei zwei Kühlmittelkanäle (17; 17') vorhanden sind, die sich auf gegenüberliegenden Seiten des Durchgangslochs (11; 11') erstrecken.

6. Werkzeug nach einem der Ansprüche 1-5, wobei sich die erste Öffnung zwischen dem Durchgangsloch (11; 11') und dem hinteren Ende (14; 14') befindet.

7. Werkzeug nach einem der Ansprüche 1-6, wobei der Kühlmittelkanal (17; 17') oder die erste Öffnung (18; 18') von einer Dichtung, wie einem O-Ring, umgeben ist (25, 25').

8. Werkzeug nach einem der Ansprüche 1-7, wobei die Düse eine einstückige Einheit ist.

9. Werkzeug nach einem der Ansprüche 1-8, wobei das Befestigungselement (12; 12') eine Schraube (12A; 12A') ist, die sich entlang eines Lochs (12B) in dem Halterkörper (2; 2') erstreckt, wobei die Schraube von einer oberen (P1) und einer unteren (P2) imaginären Ebene des Schneideinsatzes geschnitten wird.

10. Werkzeug nach einem der Ansprüche 1-9, wobei die Düse (10; 10'; 10") als Einspannmittel wirkt, das gegen einen Teil des Schneideinsatzes drückt.

11. Werkzeug nach einem der Ansprüche 1-9, wobei ein einziges Befestigungselement (12) oder eine Schraube (12A) sowohl den Schneideinsatz (5) als auch die Düse (10) hält.

## Revendications

1. Outil comprenant un corps de support (2 ; 2') présentant une cavité (3 ; 3'), une plaquette de coupe (5 ; 5') et une buse (10 ; 10'), ladite buse (10 ; 10') présentant un unique trou traversant (11 ; 11') destiné à un élément de fixation (12 ; 12'), ladite buse présentant une extrémité avant (13 ; 13'), une extrémité arrière (14 ; 14') et une face inférieure (15 ; 15'), ledit trou traversant s'étendant entre la face inférieure et une face supérieure opposée (16 ; 16'), au moins un canal à réfrigérant interne (17 ; 17') étant prévu dans la buse et s'étendant depuis une première ouverture (18 ; 18') jusqu'à une seconde ouverture (19 ; 19'), ladite première ouverture étant reliée à un conduit d'alimentation en réfrigérant dans le corps de support, ladite seconde ouverture servant de sortie pour le réfrigérant au niveau de l'extrémité avant, où le au moins un canal à réfrigérant (17 ; 17') et la première ouverture (18 ; 18') sont espacés du trou traversant (11 ; 11'), où la face inférieure (15 ; 15') de la buse (10') comprend un dispositif de guidage (23') tel qu'une protubérance ou un évidement adjacent à l'extrémité avant (13 ; 13') pour fixer la direction de la buse (10'),
**caractérisé en ce qu'**il comprend en outre un moyen de serrage sous la forme d'un élément de verrouillage (4 ; 4'), et **en ce que** la direction de la buse (10') est fixée par le fait d'avoir le dispositif de guidage coopérant avec un évidement ou une protubérance sur le moyen de serrage.

2. Outil selon la revendication 1, dans lequel la buse (10 ; 10') présente un axe longitudinal (A ; A') qui coupe le trou traversant (11 ; 11') et où la buse présente une symétrie en miroir autour d'un plan contenant un axe longitudinal (A ; A') de la buse.

3. Outil selon la revendication 1 ou 2, dans lequel la première ouverture (18 ; 18') est située au niveau d'une partie ou seconde surface (15B ; 15B') de la face inférieure (15 ; 15'), ladite partie faisant saillie de telle sorte qu'une tangente (T) à la face inférieure orientée face à la plaquette de coupe (5 ; 5'), et perpendiculaire à un axe de trou traversant (C) coupe la première ouverture ou le canal (17 ; 17').

4. Outil selon la revendication 1, 2 ou 3, dans lequel la buse (10 ; 10') est une buse amovible destinée à des applications de tournage et où l'outil comprend un moyen (25 ; 25') pour fermer la buse de manière étanche au réfrigérant par rapport au corps de support (2 ; 2').

5. Outil selon l'une quelconque des revendications 1 à 4, dans lequel il existe deux canaux à réfrigérant (17 ; 17') s'étendant à des côtés opposés du trou traversant (11 ; 11').

6. Outil selon l'une quelconque des revendications 1 à 5, dans lequel la première ouverture est située entre le trou traversant (11 ; 11') et l'extrémité arrière (14 ; 14').

7. Outil selon l'une quelconque des revendications 1 à 6, dans lequel le canal à réfrigérant (17 ; 17') ou la première ouverture (18 ; 18') est entouré par un joint d'étanchéité tel qu'un joint torique (25 ; 25').

8. Outil selon l'une quelconque des revendications 1 à 7, dans lequel la buse est une unité en un seul tenant.

9. Outil selon l'une quelconque des revendications 1 à 8, dans lequel l'élément de fixation (12 ; 12') est une vis (12A ; 12A') laquelle s'étend le long d'un trou (12B) dans le corps de support (2 ; 2'), ladite vis étant coupée par des plans imaginaires supérieur (P1) et inférieur (P2) de la plaquette de coupe.

10. Outil selon l'une quelconque des revendications 1 à 9, dans lequel la buse (10 ; 10' ; 10") sert d'élément de serrage en appuyant contre une partie de la plaquette de coupe.

11. Outil selon l'une quelconque des revendications 1 à 9, dans lequel un seul élément de fixation (12) ou une seule vis (12A) fixe à la fois la plaquette de coupe (5) et la buse (10).
